# EUROPEAN PATENT APPLICATION

(11) **EP 4 822 636 A1**
(43) Date of publication of application: **14.10.2026**
(21) Application number: 25168917.0
(22) Date of filing: 07.04.2025
(51) Int. Cl.: G06Q 50/40

(54) **METHOD AND SYSTEM FOR PROVIDING ASSISTANCE DATA FOR AT LEAST ONE PASSENGER-OWNED DEVICE IN AN AIRCRAFT**

(71) Applicant: AIRBUS Operations GmbH, 21129 Hamburg (DE)
(72) Inventor: Marko, Reinhard, 21129 Hamburg (DE); Giertzsch, Fabian, 21129 Hamburg (DE); Denzau, Isabel, 21129 Hamburg (DE); Giesa, Hans-Gerhard, 21129 Hamburg (DE); Urbaum, Hanna, 21129 Hamburg (DE)
(74) Representative: Airbus Germany

(57) **Abstract**

The present invention relates to a computer system (100) and a computer-implemented method (300) for providing assistance data for at least one passenger-owned device (200) in an aircraft (10). The method (300) comprises providing (310), via an in-aircraft first data interface (112), real-time data indicative for at least one of an aircraft context and a cabin context of the aircraft (10). Alternatively or additionally, the method (300) comprises providing (320), via the first data interface (112) or via a ground-bound second data interface (120), static data descriptive for at least one of cabin characteristics of the aircraft (10) and in-flight service offerings. Further, the method (300) comprises processing (330), by at least one accessibility application (202) running on the at least one passenger-owned device (200), at least one of the real-time data and the static data to generate the assistance data.

## Description

### TECHNICAL FIELD OF THE INVENTION

The present invention relates to a computer-implemented method for providing assistance data for at least one passenger-owned device in an aircraft. Further, the invention relates to a corresponding system, a computer program, and an aircraft.

### TECHNICAL BACKGROUND

In the field of aviation, it is common for airlines to provide various forms of assistance to passengers during flights. Known systems typically involve manual announcements made by flight attendants or automated systems that relay information through the aircraft's public address system. Also, in-cabin displays may be used to convey such information and/or announcements. These announcements can include updates on flight status, safety instructions, and service offerings such as mealtimes. Additionally, visual indicators such as the fasten seat belt sign may be used to convey important safety information to passengers. Despite these measures, the dissemination of information can sometimes be inefficient or inaccessible, particularly for passengers with disabilities or special needs.

Current approaches often rely on generalized announcements or information conveyance that might not adequately address individual passenger requirements. For instance, passengers with hearing impairments might miss auditory announcements, while those with visual impairments might not notice visual cues like the fasten seat belt sign.

Furthermore, the timing and frequency of these announcements and/or information conveyance may sometimes lead to confusion or anxiety among passengers, especially in situations where immediate action is required. Known systems also lack the ability to provide personalized assistance.

Despite the advances in the field of in-flight communication and passenger assistance, there remains a need for a more efficient and/or accessible system that can convey information to passengers, especially those with special preferences or needs.

### SUMMARY OF THE INVENTION

An object of the present invention is to provide means for providing information and/or assistance for passengers more efficiently in an aircraft. This object is solved by the subject-matter of the appended independent claims. Further embodiments are defined in the appended dependent claims.

According to a first aspect, there is provided a computer-implemented method for providing assistance data for at least one passenger-owned device (POD) in an aircraft. The method comprises providing, via an in-aircraft first data interface, real-time data indicative for at least one of an aircraft context and a cabin context of the aircraft. Additionally or alternatively, the method comprises providing, via the first data interface or via a ground-bound second data interface, static data descriptive for at least one of cabin characteristics of the aircraft and in-flight service offerings. Further, the method comprises processing, by an accessibility application running on the at least one passenger-owned device, at least one of the real-time data and the static data to generate the assistance data.

The proposed method provides several advantageous technical effects. For example, the method enables a reliable digital support for passengers in the aircraft cabin. Especially, the method provides reliable support and/or assistance for passengers with disabilities in the aircraft cabin. The data provided via the first data interface and/or the second data interface can be directly used by the accessibility application running on the at least one passenger-owned device. The first data interface may provide the real-time data in at least approximately real-time, thereby ensuring that the data and/or information carried therein reaches the passenger-owned device in a timely manner. This may keep the respective passengers up to date at all times. The assistance data provided may help with and/or increase the awareness of the passengers' surroundings. Generally, the method may enhance the onboard experience of the passengers. Also, it may improve passenger service quality by providing better assistance. In addition, safety on the aircraft may be increased, as safety-relevant data and/or information can be processed by the respective passengers more reliably and possibly more quickly.

As used herein, the assistance data may be understood as any information and/or data that is tailored to the needs and/or communication preferences of a respective passenger or a respective owner of the passenger-owned device. For example, at least one of an output type, an output medium, an output format, etc. of the assistance data may be tailored to individual needs, communication preferences, display preferences, or the like. That is, the assistance data may be conveyed by using one or more modalities, which may also be different from each other. By way of example, the assistance data may be tailored in terms of vision, e.g., providing a larger text size, brighter screen, a narrator to read text, etc. Further, by way of example, the assistance data may be tailored in terms of hearing, providing, e.g., closed captioning, mono sound, and live call transcription, etc. Also, the assistance data may be tailored in terms of mobility, providing navigation etc. That is, the assistance data may be output and/or presented to the respective passenger, via the at least one passenger-owned device, by at least one vision-related accessibility application, at least one hearing-assistive accessibility application, at least one mobility-assistive accessibility application, etc., wherein other tailored information reproduction means are conceivable. Further, the assistance data may comprise or may be configured to provide a notification, and also an active notification. Such notification may use at least one passenger-specific, i.e., an individual, modality, such as an audio signal or beep, vibration, visual indication, or the like. By way of example, such notification may notify that the next lavatory is unoccupied, and no queue is in front of it, wherein this is merely an example and not limited herein. The assistance data is not limited to the foregoing examples.

Accordingly, the at least one accessibility application running on the at least one passenger-owned device may be understood as any computer application configured to provide output of data in a manner that assists with the needs, communication preferences and/or display preferences of the respective passenger and/or owner of the passenger-owned device. Accessibility applications are specifically tailored to address various accessibility needs, providing support in areas such as communication, mobility, and sensory perception. This may include at least one of a hearing-assistive accessibility application, a mobility-assistive accessibility application, etc., wherein other tailored information reproduction means are conceivable. For example, accessibility applications may include screen reads, which convert text to speech for visually impaired users, voice recognition software that allows users with mobility impairments to control devices through voice commands, haptic feedback, contrast adjustments, navigation assistance, etc. Other examples include applications that provide real-time captioning for audio content, navigation aids for individuals with cognitive disabilities, or augmented reality tools that enhance spatial awareness for users with visual impairments. The at least one accessibility application is not limited to the foregoing examples. By way of example, the at least one accessibility application may utilize at least one of the following standards to ensure compatibility with the first data interface and/or second data interface: WCAG (Web Content Accessibility Guidelines and ISO/IEC 24751, which provides international standards for accessible information and communication technologies. These are merely examples and other standards are conceivable. The at least one accessibility application may be configured to provide a notification, also an active notification, using one or more modalities, which may be configurable by the respective passenger and/or owner of the passenger-owned device.

Further, as used herein, the first data interface may be understood as an initial point of contact or communication between the at least one passenger-owned device and the aircraft's computer system(s). This interface may be configured for transfer of data from the aircraft to the at least one passenger-owned device, and vice versa. It may use a wireless and/or a wired connection. The first data interface can be implemented using a variety of messaging protocols, including but not limited to MQTT (Message Queuing Telemetry Transport, which is a lightweight messaging protocol used for machine-to-machine (M2M) communication, CoAP (Constrained Application Protocol), which is a lightweight protocol designed for use in constrained networks and devices, such as those of an aircraft, HTTP/JSON, which is a widely adopted protocol for communication between web clients and servers, and AMQP (Advanced Message Queuing Protocol), which is a more complex messaging protocol offering features such as message queuing, routing and filtering. Through the first interface, the at least one passenger-owned device may receive aircraft context-related, cabin-related and/or flight-related data and/or information from the aircraft's system(s). Optionally, the at least one-passenger owned device may also send user-generated data to the aircraft's system(s). The choice of the protocol may depend on factors such as the specific requirements of the application, the available network bandwidth, and the level of complexity desired in the implementation.

For example, in the case of using MQTT, the standard ARINC 853 may be utilized. ARINC 853 is a standard for real-time data distribution, such as the distribution of the real-time data used herein, in avionics systems. In the context of MQTT, ARINC 853 refers to a set of protocols and standards that define how MQTT messages are transmitted and processed in an aircraft environment. That is, ARINC 853 refers to the avionics standard for real-time data distribution in aircraft systems, specifically as it relates to the use of MQTT for message queuing and telemetry transport. ARINC 853 defines the protocols and mechanisms for transmitting and processing MQTT messages within an aircraft's system(s). This may include but is not limited to message structure and format, wherein ARINC 853 defines a specific message structure and format for transmitting MQTT messages in an aircraft environment., message queuing and routing, wherein ARINC 853 defines mechanisms for validating and handling errors in MQTT messages, critical in mission-critical avionics environment, and security and privacy, wherein ARINC 853 addresses security and privacy concerns by defining protocols and procedures for secure message transmission and data protection. By leveraging ARINC 853 within an MQTT-based architecture, compatibility with a common industry standard for cabin communication is ensured.

Accordingly, the real-time data as used herein may also be referred to as live data. As used herein, the real-time data may refer to the most up-to-date information or data available at a particular point of time. For example, the real-time data may refer to the aircraft, flight and/or cabin and their surroundings. By way of example, the real-time data may indicate at least one of a flight status, such as a current position, altitude, speed, and direction of travel of the aircraft. Further, by way of example, the real-time data may indicate entertainment data, such as current media content played in the aircraft, including movies, TV shows, or music. Also, the real-time data may indicate the fasten seat belt status, which is commonly indicated by a fasten seatbelt sign in the aircraft's cabin, to indicate whether the fasten seat belt sign is active or inactive. Furthermore, the real-time data may convey passenger announcements, such as any announcement made by the flight crew to passengers, such as safety instructions or updates on flight delays or cancellations, wherein the content of announcements is not limited herein. Accordingly, the aircraft context may refer to the flight phase, i.e., the current stage of flight, such as takeoff, cruise, landing, the weather conditions, the aircraft's position, such as the heading, the aircraft's speed, etc.

As used herein, the static data may be understood as a digital twin of the physical cabin and/or its environment. It may be a digital representation of it that is stored. It may be a model that can be created by capturing and processing data from various sources. Accordingly, by way of example, the static data may comprise at least one of 2D or 3D representations of the cabin walls, ceiling, and floors, digital representations of furniture, cabin facilities, e.g. lavatories, fixtures, signs, buttons, such as providing an exact position of a flush button in lavatory, texture maps of the cabin, digital renderings of the cabin lights, windows, orientation points of the aircraft's safety card, a meal menu, an in-flight entertainment program, etc. This is not limited herein. The cabin characteristics may refer to one or more of the foregoing examples. The in-flight service offerings may refer to at least one of a meal menu, an in-flight entertainment program, and other in-flight service offering, such as shopping opportunities.

Further, as used herein, the second interface may be understood as any data interface configured to provide the static data. It may be ground-bound. It may be adapted for wireless and/or wired connections to the at least one passenger-owned device.

The at least one passenger-owned device (POD) may be understood as any electronic device brought onboard by passengers themselves, such as smartphones, tablets, laptops, smartwatches, etc. Such devices may be used during travel for communication, navigation, media consumption, and accessibility purposes. It may have communication means to connect to at least one of the first data interface and the second data interface.

According to an embodiment, the assistance data may be generated at least one of passenger-specific, situation-specific, and seat-specific. This introduces specific mechanisms for generating the assistance data tailored to individual passengers, specific situations, or particular seats within the aircraft. In this way, the assistance data enhances the personalization and relevance of the information provided to the passenger-owned device. By incorporating passenger-specific data, the method can consider individual preferences, needs, and characteristics, thereby offering a more customized assistance and/or experience. Situation-specific data allows the method to adapt to various scenarios that may arise during the flight, such as changes in flight status, turbulence, or other dynamic conditions, ensuring that the assistance provided is pertinent to the current context. Seat-specific data further refines the assistance by considering the unique attributes and location of a passenger's seat, such as proximity to exits, lavatories, or service areas, as well as any seat-specific features or limitations. This level of granularity in the data processing ensures that the assistance provided is highly relevant and useful to the passenger, enhancing their overall experience and satisfaction. This thus brings a significant improvement by making the assistance data more precise and tailored to the individual circumstances of each passenger, which is a valuable enhancement over the more general data provision described in the aspect. In other words, this customization enhances the passenger experience by ensuring that the assistance data is not generic but rather tailored to the unique circumstances of each passenger and situation.

In an embodiment, at least one of an output type and an output format of the assistance data may be adapted to comply with special needs of a respective passenger with a disability. The adaptation of the output format ensures that the assistance data is not only available but also usable and beneficial to passengers with disabilities, thereby enhancing their travel experience and ensuring inclusivity. This provides a significant improvement to the method by prioritizing accessibility and inclusivity, which are crucial in modern transportation services. It reflects a commitment to accommodating diverse passenger needs and ensuring that all passengers, regardless of their physical abilities, can access and utilize the assistance data provided during their flight. Furthermore, this adaptation could involve compliance with established accessibility standards and guidelines, ensuring that the assistance data meets recognized criteria for accessibility. This could involve the use of specific technologies or software that facilitate the conversion of data into accessible formats, thereby ensuring that the assistance data is not only informative but also compliant with accessibility standards. For example, the output type and/or output format may include modalities such as auditory, e.g., speech synthesis, alarms, etc., tactile, e.g. vibrations, haptic feedback, etc., visual, e.g., high-contrast text, braille displays, sign language videos, etc. This is not limited herein. Further, by way of example, this may comprise structural adaptations, such as high contrast or color inversion for low vision, large-print text, braille, sign language translations, simplified language or punctuation, or the like. For low vision and/or blindness, this may provide text-to-speech for instructions, e.g., seat assignments, emergency exits, braille maps of cabin layout and facilities. For deaf and/or hard of hearing, this may provide sign language video subtitles during safety briefings, tactile alerts for emergency lights or evacuation signals, for mobility impairments, this may comprise dynamic guidance and/or navigation to accessible restrooms, seats, or exits, real-time updates on wheelchair availability or boarding assistance, etc. For cognitive or neurological conditions, this may comprise simplified language and step-by-step instructions, visual cues with icons of complex procedures, e.g. using the lavatory. For hearing impairments, this may comprise vibration-based alerts for announcements or safety demos, real-time text overlay on cabin displays, etc. Also, multi-modal adaptations are possible. Customizable settings via the passenger-owned device may allow passengers to adjust output preferences dynamically. In an example scenario, a passenger with low vision may use its passenger-owned device to request a braille map of the cabin. A deaf passenger may receive tactile vibrations for passenger announcements and emergency signals. A passenger with epilepsy may receive safety instructions in text format with minimal visual stimuli. This is not limited herein. In this way, the assistance data is not only delivered via the at least one passenger-owned device but also comprehensible across a spectrum of preferences and disabilities, enhancing safety and independence of all passengers. This approach addresses specific needs, fostering an inclusive travel environment where technology adapts to human diversity. Passengers may preconfigure their output type through their device settings.

According to an embodiment, the assistance data may comprise guidance through the cabin. By providing guidance through the cabin, the processed information, i.e., the current and/or static data, is translated into actionable guidance for passengers. This guidance can assist passengers in navigating the cabin, locating specific areas such as seats, lavatories, or emergency exits, and understanding the layout of the aircraft. For example, the guidance through the cabin may involve directions to specific locations such as seats, lavatories, emergency exits, or service areas. This could be particularly beneficial for passengers with disabilities, elderly passengers, or those unfamiliar with the aircraft layout. The inclusion of guidance through the cabin as part of the assistance data leverages the processed current and/or static data to create a more user-friendly and informative experience for passengers. The guidance may be visual, auditory, or haptic, depending on the capabilities of the passenger-owned device, thereby accommodating various accessibility needs and preferences. Additionally, this feature can enhance passenger safety by providing clear directions to emergency exits and other critical areas in case of an emergency. The ability to offer real-time guidance through the cabin, based on the processed data, represents a significant advancement in in-flight passenger assistance technology. It ensures that passengers have access to relevant and timely information that can improve their overall travel experience, reduce confusion and stress, and promote a sense of security and comfort while on board the aircraft. Further, the guidance may be adjusted based on current conditions, e.g. blocked aisles, occupied lavatories, changes in passenger seating, etc. By way of example, guidance may be delivered via voice commands, haptic feedback, visual arrows on the screen of the passenger-owned device, etc. In this way, reliance on crew assistance may be reduced by empowering passengers to navigate autonomously. This may be critical during emergencies when rapid self-orientation is essential. During an emergency, real-time data updates may inform passengers of unobstructed evacuation routes, etc. Further, this may reduce the workload of the cabin crew by offloading guidance and/or navigation support.

In an embodiment, the assistance data may comprise indication of whether cabin facilities are currently occupied or accessible. For example, the real-time data may provide real-time or live updates on facility status, e.g. lavatory occupancy, emergency exit availability, crew assistance points, etc. The at least one accessibility application may use this data to inform passengers via the at least one passenger-owned device. In this way, decision making can be enhanced as passengers can avoid congested areas or seek alternatives if a facility is occupied. This may allow passengers to make informed decisions about when to access facilities such as lavatories, emergency exits, or other areas within the aircraft, without having to physically check their availability. This real-time information can help reduce waiting times and improve overall satisfaction by providing passengers with timely updates on facility availability.

According to an embodiment, the assistance data may comprise passenger announcements. The inclusion of passenger announcements as part of the assistance data implies that the system is capable of delivering real-time or pre-recorded messages to passengers, enhancing their in-flight experience and safety. This may involve announcements related to flight status, safety instructions, boarding information, or other relevant updates that passengers need to be aware of during their journey. By incorporating passenger announcements, it may be ensured that passengers receive timely and pertinent information directly on their personal devices, which can be particularly useful for individuals with accessibility needs. The processing of this data by the accessibility application ensures that the announcements are tailored to the specific needs of each passenger, potentially including options for different languages, formats, or levels of detail. This may also ensure that critical information can be communicated effectively.

In an embodiment, the assistance data may comprise indication of whether passengers are currently required to take safety precautions. This may ensure that passengers are informed promptly and accurately about any necessary actions they need to undertake, such as fastening seatbelts, securing loose items, or preparing for turbulence. This real-time communication of safety requirements is facilitated by the processing capabilities of the at least one accessibility application, which interprets the real-time data provided via the interfaces to generate relevant assistance data. The inclusion of safety precaution indicators not only augments the utility of the passenger-owned device but also aligns with regulatory and operational standards that prioritize passenger safety. In this way, the responsiveness and relevance of the information provided to passengers during flight may be improved.

According to an embodiment, the assistance data may comprise a location and/or a usage description of safety features of the aircraft. By incorporating information about the location and usage of safety features, the method ensures that passengers are better informed about critical safety aspects of the aircraft, which can be crucial in emergency situations. This may leverage the accessibility application running on the passenger-owned device to process and present this vital safety information in a user-friendly manner, thereby enhancing the overall functionality and usefulness of the assistance data.

In an embodiment, the assistance data may comprise indication of whether and/or when serving of in-flight meal is to be expected. This addition may allow passengers to plan their activities and manage their expectations regarding meal times, which can be particularly important for individuals with dietary restrictions or specific health needs that require timely meals. For passengers with disabilities, this feature can provide a sense of control and predictability, reducing anxiety and enhancing the overall travel experience. The ability to anticipate meal service can also assist passengers in coordinating their personal schedules, such as medication timings or rest periods, thereby promoting a more comfortable and accommodating environment.

According to an embodiment, the at least one passenger-owned device may further process camera data, provide in-cabin guidance based on a computational model and the camera data, and at least one of the real-time data and the static data may be used to label and/or validate the acquired computational model. By using the real-time data, which reflects the real-time context of the aircraft or cabin, or the static data, which describes cabin characteristics or in-flight service offerings, the system can effectively calibrate the computational model to align with actual conditions and services available in the aircraft. The labeling and validation process enhances the model's precision, ensuring that the guidance provided is relevant and accurate. This implementation provides a mechanism for communication between the passenger-owned device and the data interfaces, leveraging both camera data and the provided data to enrich the passenger's experience. This may provide an advanced level of interaction and personalization, as the passenger-owned device can adapt its guidance based on real-time and static information, validated through the computational model. This capability not only improves the passenger's ability to navigate and utilize services within the aircraft but also enhances the overall user experience by offering tailored assistance based on the specific context and characteristics of the flight.

A second aspect relates to the use of a passenger-owned device in an aircraft for providing assistance data to a passenger, wherein the passenger-owned device is configured to receive, via an in-aircraft first data interface, real-time data indicative for at least one of an aircraft context and a cabin context of the aircraft, and/or receive, via the first data interface or via a ground-bound second data interface, static data descriptive for at least one of cabin characteristics of the aircraft and in-flight service offerings, and process, by an accessibility application running on the at least one passenger-owned device, at least one of the real-time data and the static data to generate the assistance data.

For embodiments, variants, advantages, etc. reference is made to the first aspect. The advantages of this use may include providing passengers, especially those with disabilities, reliable real-time and static information about the aircraft and cabin environment, enhancing their onboard experience, improving safety, and reducing the workload for the crew.

According to a third aspect, there is provided a computer system for providing assistance data for at least one passenger-owned device in an aircraft. The system comprises at least one in-aircraft software-implemented platform. The system further comprises at least one of an in-aircraft first data interface coupled to the software-implemented platform and configured to provide real-time data indicative for at least one of an aircraft context and a cabin context of the aircraft and a ground-bound second data interface configured to provide static data descriptive for at least one of cabin characteristics of the aircraft and in-flight service offerings. Further, the system comprises at least one passenger-owned device configured to connect to the first data interface to receive the real-time data and/or to the second data interface to receive the static data, and process, by an accessibility application running on the at least one passenger-owned device, at least one of the real-time data and the static data to generate the assistance data.

For embodiments, variants, advantages, etc. reference is made to the first aspect and/or the second aspect. The advantages of this system may include providing passengers, especially those with disabilities, reliable real-time and static information about the aircraft and cabin environment, enhancing their onboard experience, improving safety, and reducing the workload for the crew.

For example, the at least one software-implemented platform may be implemented as or part of a centralized computer, such as a server, or the like. Generally, the software-implemented platform may be understood as software components hosted on a hardware, e.g., server hardware or the like, configured for executing instructions and processing data within the computer system.

According to an embodiment, the first data interface may be based on the Message Queuing Telemetry Transport, MQTT, protocol. This protocol is designed for lightweight, efficient communication, particularly in environments where network bandwidth and device resources are limited. By utilizing MQTT, the computer system can ensure reliable and timely transmission of real-time data indicative of the aircraft context and cabin context to the passenger-owned devices. MQTT operates on a publish-subscribe model, which allows for asynchronous communication and decouples the data producers (publishers) from the data consumers (subscribers). This model is particularly advantageous in an aircraft setting where multiple passenger-owned devices may need to receive updates simultaneously without overwhelming the network. The inclusion of MQTT as the communication protocol enhances the system's ability to manage data flow effectively, ensuring that the assistance data generated by the accessibility applications on the passenger-owned devices is based on the most current and relevant information available. Furthermore, MQTT's lightweight nature minimizes the processing load on the in-aircraft software-implemented platform or the corresponding hardware hosting it, thereby optimizing the system's overall performance. This feature brings a significant improvement in terms of scalability and efficiency, allowing the system to accommodate a larger number of passenger-owned devices without degradation in service quality. Additionally, MQTT's inherent support for Quality of Service (QoS) levels ensures that the data transmission can be tailored to meet specific reliability requirements, which is crucial in maintaining the integrity of the assistance data provided to passengers. The adoption of MQTT also facilitates easier integration with other systems and devices that support the protocol, thereby enhancing the interoperability of the computer system within the broader ecosystem of in-flight services and cabin management systems. Overall, the introduction of MQTT as the communication protocol for the first data interface significantly enhances the robustness, efficiency, and scalability of the computer system, ensuring that passengers receive timely and accurate assistance data throughout their flight.

A fourth aspect provides an aircraft, comprising the computer system of the second aspect.

For embodiments, variants, advantages, etc. reference is made to the first aspect, the second aspect and/or third aspect. The advantages of this aircraft may include providing passengers, especially those with disabilities, reliable real-time and static information about the aircraft and cabin environment, enhancing their onboard experience, improving safety, and reducing the workload for the crew.

A fifth aspect provides a computer program comprising instructions to cause the computer system of the third aspect to execute the method of the first aspect.

A further aspect provides a computer-readable storage medium comprising instructions to cause the computer system of the third aspect to execute the method of the first aspect.

The above-described aspects, embodiments, variants and examples can of course be combined without this being explicitly described. Each of the described variants and each example are thus to be regarded as optional for each of the aspects, embodiments, variants and examples or even combinations thereof. The present disclosure is thus not limited to the individual embodiments and variants in the described order or a certain combination of the aspects and variants.

### BRIEF SUMMARY OF THE DRAWINGS

The present invention is explained in more detail below with reference to the embodiments shown in the schematic figures:
- Fig. 1: illustrates in a block diagram a computer system for providing assistance data for at least one passenger-owned device, according to an embodiment.
- Fig. 2: illustrates in a block diagram a computer system for providing assistance data for at least one passenger-owned device, according to an embodiment.
- Fig. 3: illustrates an aircraft with a computer system, according to an embodiment.
- Fig. 4: illustrates in a flowchart a method for providing assistance data for at least one passenger-owned device, according to an embodiment.

In the figures of the drawing, elements, features and components which are identical, functionally identical and of identical action are denoted in each case by the same reference designations unless stated otherwise.

### DESCRIPTION OF EXEMPLARY EMBODIMENTS

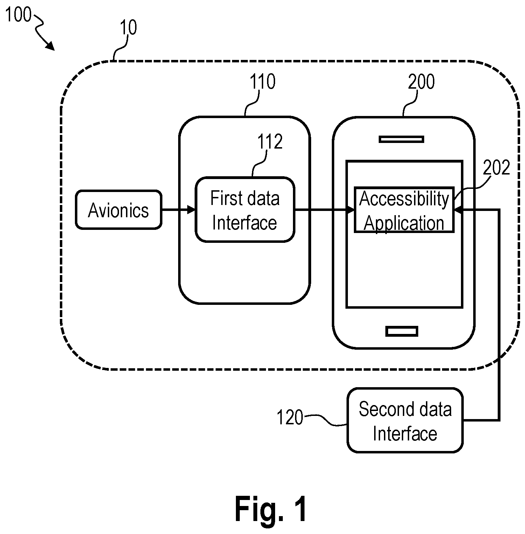

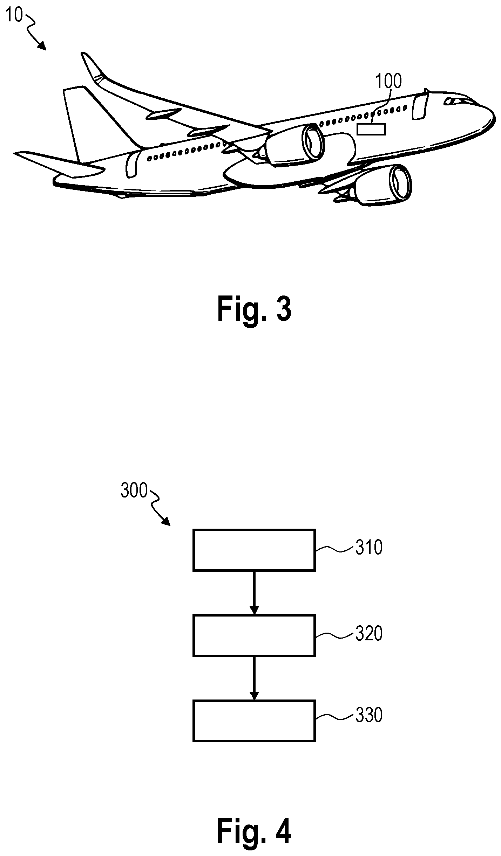

Fig. 1 illustrates in a block diagram a computer system 100 for an aircraft 10 (see Fig. 3). The computer system is at least partially integrated into the aircraft 10, as indicated in Fig. 1 by a dashed frame reflecting the system boundaries or scope of the aircraft 10. The computer system 100 is for providing assistance data for at least one passenger-owned device (POD) 200 in the aircraft 10.

The computer system 100 comprises at least one in-aircraft software-implemented platform 110. For example, the at least one software-implemented platform 110 may be implemented as a centralized computer or hardware or part of a centralized computer or hardware, such as a server, or the like. Generally, the software-implemented platform 110 may be understood as hardware, e.g. server hardware, configured for executing instructions and processing data within the computer system 100.

Further, the computer system 100 comprises an in-aircraft first data interface 112 coupled to the software-implemented platform 110 and configured to provide real-time data indicative for at least one of an aircraft context and a cabin context of the aircraft. Alternatively or additionally, the computer system 100 comprises a ground-bound second data interface 120 configured to provide static data descriptive for at least one of cabin characteristics of the aircraft and in-flight service offerings, and process. In Fig. 1, the flow of the real-time data is indicated by an arrow starting from the first data interface 112. Also, in Fig. 1, the flow of the static data is indicated by an arrow starting from the second data interface 120. The first data interface 112 and/or the second data interface 120 may be configured to provide a wireless and/or a wired connection. For example, the first data interface 110 may be understood as an initial point of contact or communication between the at least one POD 200 and the aircraft's computer system(s). This interface may be configured for transfer of data from the aircraft 10 to the at least one POD 200, and vice versa. It may use a wireless and/or a wired connection. The first data interface 112 can be implemented using a variety of messaging protocols, including but not limited to MQTT (Message Queuing Telemetry Transport, which is a lightweight messaging protocol used for machine-to-machine (M2M) communication, CoAP (Constrained Application Protocol), which is a lightweight protocol designed for use in constrained networks and devices, such as those of an aircraft, HTTP/JSON, which is a widely adopted protocol for communication between web clients and servers, and AMQP (Advanced Message Queuing Protocol), which is a more complex messaging protocol offering features such as message queuing, routing and filtering.

Further, by way of example, the real-time data may also be referred to as real-time data or live data. Accordingly, the real-time data may refer to the most up-to-date information or data available at a particular point of time. For example, the real-time data may refer to the aircraft, flight and/or cabin and their surroundings. By way of example, the real-time data may indicate at least one of a flight status, such as a current position, altitude, speed, and direction of travel of the aircraft. Further, by way of example, the real-time data may indicate entertainment data, such as current media content played in the aircraft, including movies, TV shows, or music. Also, the real-time data may indicate the fasten seat belt status, which is commonly indicated by a fasten seatbelt sign in the aircraft's cabin, to indicate whether the fasten seat belt sign is active or inactive. Furthermore, the real-time data may convey passenger announcements, such as any announcement made by the flight crew to passengers, such as safety instructions or updates on flight delays or cancellations, wherein the content of announcements is not limited herein. Accordingly, the aircraft context may refer to the flight phase, i.e., the current stage of flight, such as takeoff, cruise, landing, the weather conditions, the aircraft's position, such as the heading, the aircraft's speed, etc.

Further, by way of example, the static data may be understood as a digital twin of the physical cabin and/or its environment. It may be a digital representation of it that is stored. It may be a model that can be created by capturing and processing data from various sources. Accordingly, by way of example, the static data may comprise at least one of 2D or 3D representations of the cabin walls, ceiling, and floors, digital representations of furniture, cabin facilities, e.g., lavatories, fixtures, signs, buttons, such as providing an exact position of a flush button in lavatory, texture maps of the cabin, digital renderings of the cabin lights, windows, orientation points of the aircraft's safety card, a meal menu, an in-flight entertainment program, etc. This is not limited herein. The cabin characteristics may refer to one or more of the foregoing examples. The in-flight service offerings may refer to at least one of a meal menu, an in-flight entertainment program, and other in-flight service offering, such as shopping opportunities.

Further, to the computer system 100 comprises, or is at least couplable with, the at least one POD 200. The POD 200 may be understood as any electronic device brought onboard by passengers themselves, such as smartphones, tablets, laptops, smartwatches, etc. Such devices may be used during travel for communication, navigation, media consumption, and accessibility purposes. It may have communication means to connect to communication and/or data interface, e.g. by using a wireless or wired connection. The at least one POD 200 is configured to run at least one accessibility application 202.

The at least one POD 200 is configured to connect to the first data interface 112 to receive the real-time data and/or to the second data interface 120 to receive the static data. Further, the at least one POD 200 is configured to process, by the at least one accessibility application 202 running on the at least one POD 200, at least one of the real-time data and the static data to generate the assistance data. For example, the assistance data may be any information and/or data that is tailored to the needs and/or communication preferences of a respective passenger or a respective owner of the POD 200. By way of example, at least one of an output type, an output medium, an output format, etc. of the assistance data may be tailored to individual needs, communication preferences, display preferences, or the like. For instance, the assistance data may be tailored in terms of vision, e.g. providing a larger screen, brighter screen, a narrator to read text, etc. Further, by way of example, the assistance data may be tailored in terms of hearing, providing e.g. closed captioning, mono sound, and live call transcription, etc. Also, the assistance data may be tailored in terms of mobility, providing navigation etc. That is, the assistance data may be output and/or presented to the respective passenger, via the at least one POD 200, by at least one vision-related accessibility application, at least one hearing-assistive accessibility application, at least one mobility-assistive accessibility application, etc., wherein other tailored information reproduction means are conceivable. The assistance data is not limited to the foregoing examples.

Accordingly, the at least one accessibility application 202 running on the at least one POD 200 may be any computer application configured to provide output of data in a manner that assists with the needs, communication preferences and/or display preferences of the respective passenger and/or owner of the POD 200. Accessibility applications are specifically tailored to address various accessibility needs, providing support in areas such as communication, mobility, and sensory perception. This may include at least one of a hearing-assistive accessibility application, a mobility-assistive accessibility application, etc., wherein other tailored information reproduction means are conceivable. For example, accessibility applications may include a screen reader, which con-vert text to speech for visually impaired users, voice recognition software that al-lows users with mobility impairments to control devices through voice commands, haptic feedback, contrast adjustments, navigation assistance, etc. Other examples include applications that provide real-time captioning for audio content, navigation aids for individuals with cognitive disabilities, or augmented reality tools that enhance spatial awareness for users with visual impairments. The at least one accessibility application 202 is not limited to the foregoing examples. By way of example, the at least one accessibility application 202 may utilize at least one of the following standards to ensure compatibility with the first data interface and/or second data interface: WCAG (Web Content Accessibility Guidelines and ISO/IEC 24751, which provides international standards for accessible information and communication technologies. These are merely examples and other standards are conceivable.

In at least some embodiments, the assistance data may be generated at least one of passenger-specific, situation-specific, and seat-specific. Further, at least one of an output type and an output format of the assistance data may be adapted to comply with special needs of a respective passenger with a disability. Also, in at least some embodiments, the assistance data may comprise guidance through the cabin. Further, the assistance data may comprise indication of whether cabin facilities are currently occupied or accessible. Also, in at least some embodiments, the assistance data may comprise passenger announcements. Further, the assistance data may comprise indication of whether passengers are currently required to take safety precautions. Also, in at least some embodiments, the assistance data may comprise a location and/or a usage description of safety features of the aircraft 10. Further, the assistance data may comprise indication of whether and/or when serving of in-flight meal is to be expected. Also, in at least some embodiments, the at least one POD 200 may further process camera data, provide in-cabin guidance based on a computational model and the camera data, and at least one of the real-time data and the static data is used to label and/or validate the acquired computational model.

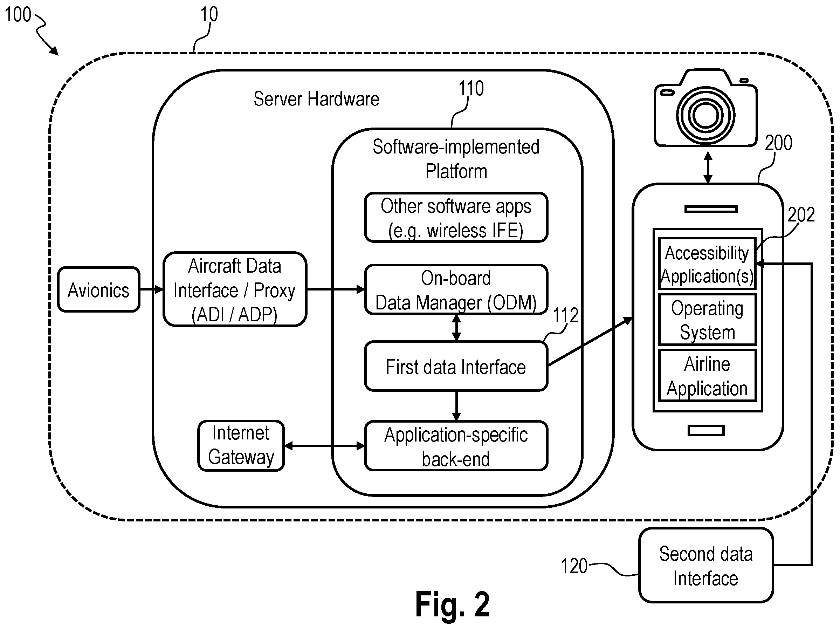

Fig. 2 illustrates in a block diagram a more specific implementation of the computer system 100.

Central to the system 100 according to Fig. 2 is a server hardware, which may include the software-implemented platform 110 and a passenger application host platform, which may also be referred to as Open Software Platform (OSP) . This platform hosts various applications, including other OSP apps such as wireless In-Flight Entertainment (IFE), and an on-board Data Manager (ODM). The ODM is responsible for managing data flows within the aircraft 10, interfacing with the first data interface 112 to provide the real-time data indicative of the aircraft context and/or cabin context.

As above, the first data interface 112 is configured to enable communication between the server hardware and the at least one POD 200. It facilitates the transfer of the real-time data. This first data interface 112 is hosted on the software-implemented platform 110 running on server hardware

Adjacent to the server hardware may be an Aircraft Data Interface/Proxy (ADI/ADP), which may serve as a conduit for avionics data. This interface ensures that relevant aircraft data is accessible to the server hardware, allowing for comprehensive data processing and integration into the system's applications.

The system 110 according to Fig. 2 may also comprise an internet gateway, which connects to an application-specific backend. This gateway is instrumental in providing access to external data sources and services, enhancing the system's 100 capability to deliver static data descriptive of cabin characteristics and in-flight service offerings.

As above, the at least one POD 200 may be equipped with the at least one accessibility application 202, and, additionally, with an operating system and, optionally, an airline application. The at least one POD 200 may be connected to the first data interface 112 to receive the real-time data and may also be connected to the second data interface 120 to receive the static data. The at least one accessibility application 202 may process at least one of the current and the static data to generate assistance data tailored to the needs of passengers, including those with disabilities.

Fig. 3 illustrates the above-mentioned aircraft 10. It comprises the above-described computer system 100 in one or more of the embodiments described above.

Fig. 4 illustrates in a flowchart a computer-implemented method 300 for providing assistance data for the at least one POD 200 in the aircraft 10. The method may be implemented by using the above-described computer system 100.

The method 300 comprises providing 310, via an in-aircraft first data interface 112, real-time data indicative for at least one of an aircraft context and a cabin context of the aircraft 10. Alternatively or additionally, the method 300 comprises providing 320, via the first data interface 112 or via a ground-bound second data interface 120, static data descriptive for at least one of cabin characteristics of the aircraft 10 and in-flight service offerings. Further, the method 300 comprises processing 330, by at least one accessibility application 202 running on the at least one POD 200, at least one of the real-time data and the static data to generate the assistance data.

The method may be modified in accordance with any one of the embodiments which are described herein by reference to the computer system 100.

The above-described aspects, embodiments, variants and examples can of course be combined without this being explicitly described. Each of the described variants and each example are thus to be regarded as optional for each of the aspects, embodiments, variants and examples or even combinations thereof. The present disclosure is thus not limited to the individual embodiments and variants in the described order or a certain combination of the aspects and variants.

### LIST OF REFERENCE SIGNS

- 10: aircraft
- 100: computer system
- 110: software-implemented platform
- 112: first data interface
- 120: second data interface
- 200: passenger-owned device (POD)
- 202: Accessibility application
- 300: method
- 3x0: method step(s)

## Claims

1. A computer-implemented method (300) for providing assistance data for at least one passenger-owned device (200) in an aircraft (10), the method (300) comprising:
providing (310), via an in-aircraft first data interface (112), real-time data indicative for at least one of an aircraft context and a cabin context of the aircraft (10); and/or
providing (320), via the first data interface (112) or via a ground-bound second data interface (120), static data descriptive for at least one of cabin characteristics of the aircraft (10) and in-flight service offerings; and
processing (330), by at least one accessibility application (202) running on the at least one passenger-owned device (200), at least one of the real-time data and the static data to generate the assistance data.

2. The method (300) of claim 1, wherein the assistance data is generated at least one of passenger-specific, situation-specific, and seat-specific.

3. The method (300) of claim 1 or 2, wherein at least one of an output type and an output format of the assistance data is adapted to comply with special needs of a respective passenger with a disability.

4. The method (300) of any one of the preceding claims, wherein the assistance data comprises guidance through the cabin.

5. The method (300) of any one of the preceding claims, wherein the assistance data comprises indication of whether cabin facilities are currently occupied or accessible.

6. The method (300) of any one of the preceding claims, wherein the assistance data comprises passenger announcements.

7. The method (300) of any one of the preceding claims, wherein the assistance data comprises indication of whether passengers are currently required to take safety precautions.

8. The method (300) of any one of the preceding claims, wherein the assistance data comprises a location and/or a usage description of safety features of the aircraft (10).

9. The method (300) of any one of the preceding claims, wherein the assistance data comprises indication of whether and/or when serving of in-flight meal is to be expected.

10. The method (300) of any one of the preceding claims, wherein the at least one passenger-owned device (200) further processes camera data, provides in-cabin guidance based on a computational model and the camera data, and at least one of the real-time data and the static data is used to label and/or validate the acquired computational model.

11. Use of a passenger-owned device (200) in an aircraft (10) for providing assistance data to a passenger, wherein the passenger-owned device (200) is configured to receive, via an in-aircraft first data interface (112), current data indicative for at least one of an aircraft context and a cabin context of the aircraft (10), and/or receive, via the first data interface (112) or via a ground-bound second data interface (120), static data descriptive for at least one of cabin characteristics of the aircraft (10) and in-flight service offerings, and process, by at least one accessibility application (202) running on the at least one passenger-owned device (200), at least one of the current data and the static data to generate the assistance data.

12. A computer system (100) for providing assistance data for at least one passenger-owned device (200) in an aircraft (10), comprising:
at least one in-aircraft software-implemented platform (110);
an in-aircraft first data interface (112) coupled to the software-implemented platform (110) and configured to provide real-time data indicative for at least one of an aircraft context and a cabin context of the aircraft (10); and/or
a ground-bound second data interface (120) configured to provide static data descriptive for at least one of cabin characteristics of the aircraft (10) and in-flight service offerings, and process; and
at least one passenger-owned device (200) configured to connect to the first data interface (112) to receive the real-time data and/or to the second data interface (120) to receive the static data, and process, by at least one accessibility application (202) running on the at least one passenger-owned device (200), at least one of the real-time data and the static data to generate the assistance data.

13. The computer system (100) of claim 12, wherein the first data interface (112) is based on the Message Queuing Telemetry Transport, MQTT, protocol.

14. An aircraft (10), comprising the computer system (100) of any one of claims 12 and 13.

15. A computer program comprising instructions to cause the computer system (100) of any one of claims 12 and 13 to execute the method (300) of any one of claims 1 to 10.
